# EUROPÄISCHE PATENTSCHRIFT

(11) **EP 2 642 257 B1**
(45) Veröffentlichungstag und Bekanntmachung des Hinweises auf die Patenterteilung: **02.01.2019**
(21) Anmeldenummer: 12008117.9
(22) Anmeldetag: 11.11.2010
(51) Int. Cl.: G01F 15/08, B67D 7/00

(54) **Vorrichtung und Verfahren zur Mengenbestimmung bei der Rücknahme eines kohlenstoffdioxidhaltigen Getränks aus einem Rücknahmetank in einen Anlieferungstank**
Device and method for determining a volume on the return of a carbonated beverage from a return tank into a delivery tank
Dispositif et procédé de détermination de la quantité lors du retrait d'une boisson contenant du dioxyde de carbone d'une citerne de retrait dans une citerne de livraison

(43) Veröffentlichungstag der Anmeldung: 25.09.2013
(62) Teilanmeldung aus: 10014529.1
(73) Patentinhaber: ARBAprocessing GmbH, 48282 Emsdetten (DE)
(72) Erfinder: Düning, Lothar, 35418 Busek (DE); Leichsenring, Detlef, 33719 Bielefeld (DE); Barlian, Reinhold, 97980 Bad Mergentheim (DE)
(74) Vertreter: Hauck Patentanwaltspartnerschaft mbB

(56) Entgegenhaltungen:
- EP-A1- 0 855 576
- DE-A1- 2 736 282
- DE-A1- 3 024 493
- DE-C1- 19 733 715

## Beschreibung

### TECHNISCHES GEBIET

Die Erfindung betrifft eine Vorrichtung zur Mengenbestimmung bei der Rücknahme eines kohlenstoffdioxidhaltigen Getränks, insbesondere Bier, aus einem Rücknahmetank in einen Anlieferungstank, mit einer sich von dem Anlieferungstank zu dem Rücknahmetank erstreckenden, der Überführung des Getränks dienenden Überführungsleitung, einer Messleitung, die einen Abschnitt der Überführungsleitung bildet, einer der Messleitung zugeordneten Durchfluss-Messeinrichtung zum Messen einer durch die Messleitung strömenden Getränkemenge, einem oberstromig der Durchfluss-Messeinrichtung angeordneten Gasmessverhüter zur Abscheidung von Gasbestandteilen aus dem in der Messleitung strömenden Getränk, einer oberstromig des Gasmessverhüters in der Messleitung angeordneten Pumpe und einem unterstromig der Durchfluss-Messeinrichtung in der Messleitung angeordneten Rückschlag-/Druckhalteventil, einer ersten und einer zweiten Rückführleitung, die jeweils im Bypass zur Messleitung geführt ist und beiderseits in die Überführungsleitung einmündet, wobei die erste Rückführleitung über eine erste und eine zweite Einmündungsstelle und die zweite Rückführleitung über eine dritte und eine vierte Einmündungsstelle einmünden, wobei, bezogen auf die Strömungsrichtung in der Messleitung, die dritte Einmündungsstelle oberstromig der ersten Einmündungsstelle und die vierte Einmündungsstelle oberstromig der zweiten Einmündungsstelle angeordnet sind, und wobei die Rückführleitungen im Bereich jeder Einmündungsstelle durch ein zugeordnetes Absperrventil absperrbar sind, und mit einem zwischen benachbarten Einmündungsstellen angeordneten Absperrventil. Darüber hinaus betrifft die Erfindung ein mit der vorgenannten Vorrichtung durchführbares Verfahren. Die Vorrichtung und das mit dieser durchführbare Verfahren sind für die Rücknahme insbesondere von Bier geeignet, wobei Bier bekanntlich gasförmiges Kohlenstoffdioxid (CO₂) bindet und löst, wenn das Bier bei einem Druck bevorratet wird, der oberhalb des Lösungsdruckes für Kohlenstoffdioxid liegt. Dieser physikalische Sachverhalt ist gleichermaßen für andere kohlenstoffdioxidhaltige Getränke gültig, wobei im vereinfachenden fachlichen Sprachgebrauch auch von kohlensäurehaltigen Getränken oder Kohlensäure im Bier gesprochen wird.

### STAND DER TECHNIK

Aus der DE 27 36 282 A1 ist ein System zum Transport und zur Lagerung von kohlensäurehaltigen Getränken, insbesondere Bier, bekannt, bei dem das Getränk mit einem Tankfahrzeug (Anlieferungstank) zum Verbrauchsort transportiert wird, bei dem sich am Verbrauchsort mindestens ein stationärer Drucktank (Gastrotank) befindet, der mit zwei Öffnungen versehen ist, von denen eine mit einer Druckgas-Armatur und die andere mit einer Getränke-Armatur verschlossen ist. Die Druckgas-Armatur ist mit einer Druckgas-Quelle und die Getränke-Armatur ist zwecks Zuführung des Getränks in den Drucktank mit dem Tankfahrzeug oder zwecks Entnahme des Getränks mit einer Zapfstelle am Verbrauchsort verbindbar. Weiterhin ist in dem Drucktank ein mit der Getränke-Armatur verbundener Foliensack, insbesondere ein sog. Doppelkammer-Foliensack angeordnet, der zur Aufnahme des Getränks in dem Drucktank dient. Als Druckgas wird ein sauerstofffreies und die Getränkequalität nicht beeinflussendes Gas, vorzugsweise Kohlenstoffdioxid, verwendet. Das Tankfahrzeug ist mit einer mit der Druckgas-Armatur verbindbaren Druckgas-Pumpe sowie einem Druckgas-Speicher versehen, um Druckgas vor dem Füllen eines Foliensackes mit dem Getränk in den Drucktank zu pumpen, um das beim Füllen des Foliensackes aus dem Drucktank verdrängte Druckgas aufzunehmen und um das im Drucktank befindliche Druckgas nach dem Entleeren des Foliensackes und vor dem Einsetzen eines neuen Foliensackes aus dem Drucktank abzusaugen.

Die Entnahme des Getränks aus dem Foliensack beschränkt sich auf dessen Überführung zur Zapfstelle; eine Rücknahme des Getränks aus dem Gastrotank in den Anlieferungstank ist nicht vorgesehen. Eine Mengenmessung des vom Anlieferungstank in den Gastrotank überführten kohlensäurehaltigen Getränks ist weder explizit offenbart noch sind diesbezügliche messtechnische Probleme durch Entbindung des Kohlenstoffdioxids bei der Überführung des Getränks thematisiert.

Eine Vorrichtung der einleitend beschriebenen Gattung ist durch einen anmelderseitig geschaffenen Stand der Technik bekannt und in einem **ANHANG** zur **Baumusterprüfbescheinigung Nr. A 045/1905/2009** des Bundesamtes für Eich- und Vermessungswesen (BEV) belegt. Eine schematische Darstellung dieser Vorrichtung zeigt u.a.

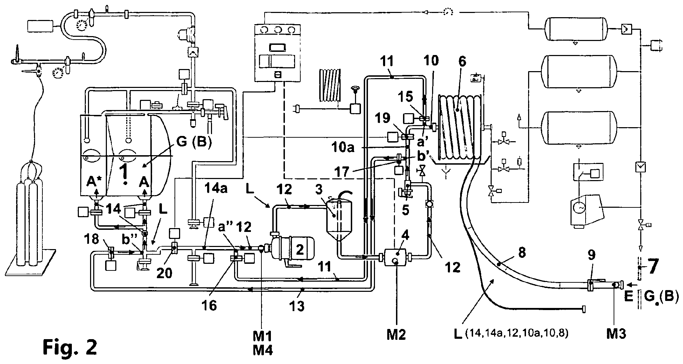

- **Figur 2**: der Zeichnung der Erfindung, und die wesentliche Struktur dieser Vorrichtung, auf die es im Zusammenhang mit der vorliegenden Erfindung ankommt, ist in einer noch weiter abstrahierten Darstellung gemäß

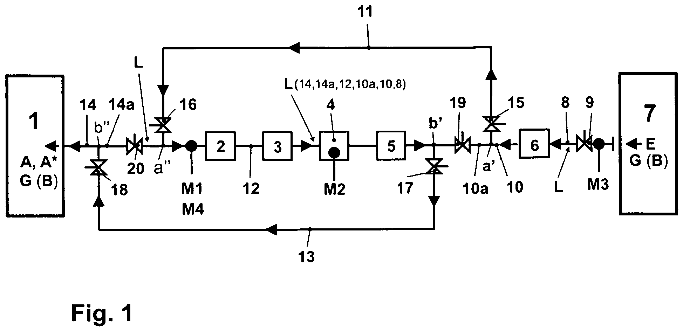

- **Figur 1**: der Zeichnung der Erfindung dargestellt. Die in Figur 1 dargestellten Teile der Vorrichtung sind in Figur 2 durch eine breitere Strichstärke kenntlich gemacht.

In der DE 30 24 493 A1 sind ein Verfahren und eine Einrichtung zum Einleiten von Gas, insbesondere Kohlenstoffdioxid, in eine Flüssigkeit beschrieben. Vor dem Einleiten des Kohlenstoffdioxidgases in die Flüssigkeit werden mit einer Messvorrichtung die Temperatur der Flüssigkeit und der Druck des Kohlendioxidgases gemessen. Aus diesen Messwerten wird der zur Erzielung eines bestimmten Kohlenstoffdioxidgehaltes der Flüssigkeit einzustellende Kohlenstoffdioxid-Imprägnierungsdruck errechnet. Mit diesem errechneten Wert wird mit einem Regler in Abhängigkeit von einem gegebenen momentan-Sollwert ein Stellventil angesteuert. Dieses Verfahren, das nach Art einer kontinuierlichen Vorwärtsregelung wirkt, wird durch eine in bestimmten Zeitabständen durchgeführte Rückwärtsregelung erweitert.

Die Druckschrift EP 0 855 576 A1 beschreibt ein Verfahren und eine Anlage zum Messen des Volumens durchströmender Flüssigkeiten unter Meidung von Messfehlern durch unzulässig hohe Gasanteile, bei dem der Gasanteil der durch eine Leitungsstrecke strömenden Flüssigkeit erfasst, die Abweichung des erfassten Gasanteiles von einem zulässigen Wert ermittelt, der Volumenstrom der Flüssigkeit in Abhängigkeit von der ermittelten Abweichung in mehreren Stufen und/oder stetig beeinflusst und das Volumen durchströmender Flüssigkeit gemessen wird. Bei den durchströmenden Flüssigkeiten handelt es sich vorzugsweise um Heizöl oder Dieselkraftstoff, das von einem Tankfahrzeug abgegeben wird, und der Gasanteil kommt durch Lufteintrag zustande, der betriebsbedingt durch einen Wechsel von einer zu entleerenden Kammer des Tankfahrzeuges auf eine andere Kammer oder beim Leerfahren einer Kammer eintritt. Der Gasanteil wird über einen Gasblasensensor erfasst, der, in Strömungsrichtung gesehen, einem Entgasungsbehälter vor- und einer Verdrängerpumpe nachgeordnet ist. Die Verdrängerpumpe wird drehzahlkonstant betrieben, wobei der Förderstrom der durch die Leitungsstrecke strömenden Flüssigkeit durch ein die Verdrängerpumpe überbrückendes pneumatisch geregeltes Überströmventil veränderbar ist. Unzulässig hohe Gasanteile werden vor Messung des Volumens der durchströmenden Flüssigkeit durch Selbstausgasung bei reduzierter Durchflussrate abgeschieden.

Die Druckschrift DE 197 33 715 C1 offenbart ein Verfahren zum Betrieb einer Anlage zur Abgabe von Flüssigkeit aus einem mehrere Kammern enthaltenden Tankwagen im Wesentlichen durch Schwerkraft und eine Anlage zur Durchführung des Verfahrens. Bei den Flüssigkeiten handelt es sich vorzugsweise um flüssige Brennstoffe. In einer an die Kammern angeschlossenen Abgabeleitung ist ein Gasblasensensor angeordnet, der, in Strömungsrichtung gesehen, vor einem Volumenzähler und unterhalb und sehr nahe an einem Gaseinschlüsse in der Flüssigkeit sammelnden Kollektor angeordnet ist. Mit Hilfe des für die gasfreie Flüssigkeitsabgabe vorgesehenen Gasblasensensors kann festgestellt werden, wann die Abgabeleitung ausreichend gefüllt ist, sodass sichergestellt ist, dass nur blasenfreie Flüssigkeit den Volumenzähler durchströmt.

Mit der Vorrichtung nach den **Figuren 1** und **2** ist eine Mengenerfassung bei der Abgabe von Bier B aus einem Anlieferungstank 1 durchführbar, wobei die Vorrichtung in diesem Falle vom Anlieferungstank 1 über eine Überführungsleitung L, die aus den Leitungsabschnitten 14, 14a, einer Messleitung 12, weiteren Leitungsabschnitten 10a, 10 und einer flexiblen Leitung 8 (Druckschlauch) besteht, bis zu einem Zapfventil 9, das an einem Gastrotank 7 Anschluss findet, durchströmt ist.

Mit der Vorrichtung nach den **Figuren 1** und **2** ist aber auch eine Mengenerfassung bei der Rücknahme von Bier B aus dem Gastrotank 7, der nunmehr als Rücknahmetank 7 fungiert, durchführbar. Der Strömungsweg des Bieres B bei der Rücknahme ist mit Pfeilen markiert. Maßnahmen zur eichgenauen Mengenerfassung bei der Rücknahme kohlenstoffdioxidhaltiger Getränke G, insbesondere Bier B, aus dem Rücknahmetank 7 in den Anlieferungstank 1 sind Gegenstand der vorliegenden Erfindung.

Die in erste Linie für die Abgabe von Bier B konzipierte Vorrichtung gemäß den **Figuren 1** und **2** wird im Falle der Rücknahme von Bier B aus dem Rücknahmetank 7 (Eintritt E) folglich vom Zapfventil 9 aus rückwärts über die flexible Leitung 8, eine Schlauchtrommel 6 und einer, in Strömungsrichtung gesehen, hinter letzterer aus dem ersten Leitungsabschnitt 10 der Überführungsleitung L an einer ersten Einmündungsstelle a' abzweigenden ersten Rückführleitung 11 durchströmt und gelangt an einer zweiten Einmündungsstelle a" zum Saugstutzen einer Pumpe 2. Von hier aus erfolgt eine der Abgabe von Bier B entsprechende Durchströmung der Messleitung 12, in der unterstromig der Pumpe 2 eine gasmessverhütende Einrichtung, ein Gasmessverhüter 3 zur Abscheidung von Gasbestandteilen aus dem in der Messleitung 12 strömenden Bier B, eine Durchfluss-Messeinrichtung 4 und ein Rückschlag-/Druckhalteventil 5 angeordnet sind. Am Ende der Messleitung 12 befindet sich eine dritte Einmündungsstelle b' einer zweiten Rückführleitung 13, an der die Messleitung 12 in den zweiten Leitungsabschnitt 10a der Überführungsleitung L übergeht. Die zweite Rückführleitung 13 mündet an einer vierten Einmündungsstelle b" zwischen dem dritten und dem vierten Leitungsabschnitt 14, 14a der Überführungsleitung L in letztere ein und durchströmt die Vorrichtung bis zum Anlieferungstank 1 in umgekehrter Richtung zur Strömungsführung bei der Abgabe von Bier B. Die vorstehende Strömungsführung bei der Rücknahme von Bier B wird durch Absperrventile 15 bis 20 verwirklicht, wobei die Absperrventile 15 bis 18 jeweils geöffnet und die Absperrventile 19 und 20 jeweils geschlossen sind. Bei der Abgabe von Bier B sind die Absperrventile 15 bis 18 jeweils geschlossen und die Absperrventile 19 und 20 jeweils geöffnet.

Die Rücknahme von Bier erfolgt beispielsweise dann, wenn es sich um sog. "verunfalltes" Bier handelt. Ein derartiges Bier ist beispielsweise zu alt oder wegen eines beschädigten Foliensacks "Inliners" (auch als "Inliner" bekannt; Plastik-Sack im Rücknahme- bzw. Gastrotank 7) schlecht geworden. Es kann sich bei dem zurückgenommenen Bier aber auch um eine planmäßige Rücknahme einwandfreien Bieres handeln, das wiederverwendet wird. Diesbezügliche Biere fallen dann zur Rücknahme an, wenn beispielsweise alkoholhaltige Biere aus z.B. Sportarenen gegen alkoholfreie Biere ausgetauscht werden sollen, weil Bestimmungen den Ausschank alkoholhaltiger Biere im Rahmen bestimmter Veranstaltungen verbieten. Die Rücknahme dieser alkoholfreien Biere bei Wegfall der vorgenannten Restriktionen ist dann ebenfalls eine Variante. Die Kriterien für die zu fordernde Hygiene sind für die Abgabe und die Rücknahme der Biere oder kohlenstoffdioxidhaltiger Getränke schlechthin gleich.

In beiden Fällen (Abgabe, Rücknahme) erfolgt die Mengenabgrenzung in einem sog. Vollschlauchsystem. Dies bedeutet, dass das gesamte System für den Getränkeweg, vom Anlieferungstank bis zum Gastrotank (Abgabe) und umgekehrt vom Gastro- bzw. Rücknahmetank zum Anlieferungstank (Rücknahme), und zwar über die gesamte Zeitdauer der Überführung, vollständig mit Getränk gefüllt ist und gefüllt bleiben muss, ohne dass es zur Entbindung von im Getränk unter Druck gelöstem Kohlenstoffdioxid (CO₂) kommt.

Während die Abgabe von Bier bzw. Getränk mit der vorg. Vorrichtung relativ einfach und unproblematisch ist und seit jeher den eichrechtlichen Anforderungen genügen muss, wird die Rücknahme bislang eher als Rand- und Nebenlösung angesehen, die nicht unter allen denkbaren Betriebszuständen eine Mengenabgrenzung mit den üblichen eichrechtlichen Anforderungen erfüllt.

Bei der Abgabe von Bier bzw. Getränk wird die Vorrichtung, wie vorstehend kurz dargestellt, durchströmt. Nach Erreichen einer Vorwahlmenge stoppt die Pumpe 2 und beendet die Förderung, alle pneumatisch gesteuerten Absperrventile schließen, das Rückschlag-/Druckhalteventil 5 schließt durch Federdruck und ebenso schließt ein nicht dargestelltes Rückschlagventil am Ende der flexiblen Leitung 8 im Bereich des Zapfventils 9 (Vollschlauch). Diese Beschreibung macht deutlich, dass es bei dem regulären Betrieb der Vorrichtung im Zuge der Abgabe allenfalls zu einem Druckstoß und einer damit verbundenen kurzzeitigen Druckerhöhung im bier- bzw. getränkeführenden Vorrichtungssystem kommen kann. Eine Kohlenstoffdioxidentbindung, die zu einem Messfehler führt, ist daher durch diese Betriebsweise nicht gegeben. Die eichrechtlichen Bestimmungen werden daher erfüllt.

Zusätzlich wird durch eine nicht bezeichnete, aber oberhalb des Anlieferungstanks 1 dargestellte Druckregelung bei der Nachführung des Kohlenstoffdioxids im Anlieferungstank 1 dafür Sorge getragen, dass der Systemdruck in der vom Bier B bzw. dem Getränk immer oberhalb des bei der gegebenen Temperatur vorliegenden Entbindungsdrucks der jeweiligen Bier- oder Getränkeart gehalten wird.

Die Rücknahme von Bier mit einer in erster Linie für die Abgabe von Bier bestimmten, bei der letztgenannten Betriebsweise die eichrechtlichen Bestimmungen erfüllenden Vorrichtung wurde bislang seitens der Eichbehörden geduldet, weil entweder mögliche Störfaktoren nicht in Gänze bekannt und erkannt wurden und/oder weil Lösungen zur Abhilfe noch nicht gefunden wurden. In dem Maße, wie die vorg. Rücknahme von Bier oder jene von kohlenstoffdioxidhaltigen Getränken allgemein kommerziell an Bedeutung gewinnt, wird auch dieses Überführungsprinzip unter allen denkbaren Betriebszuständen - auch den kritischen - den eichrechtlichen Anforderungen genügen müssen.

Um Lösungen zu finden, muss man zunächst die Ursachen und Auswirkungen von kritischen Betriebszuständen bei der Rücknahme von Bier bzw. kohlenstoffdioxidhaltigen Getränken kennen, um diese dann technisch abzusichern. Ein wesentlicher, kritischer Betriebszustand liegt dann vor, wenn der Rücknahmetank 7 leerfällt und sich der Foliensack, der sog. "Inliner", verschließend vor die Auslauföffnung legt oder das an letzterer angeschlossene Zapfventil 9 geschlossen wird. In diesem Falle darf dann der Systemdruck nicht so weit sinken, dass das Bier bzw. Getränk schäumt, d.h. dass Kohlenstoffdioxid entbinden kann. Wenn unter diesen Bedingungen die Pumpe 2 weiterfördert, wenn auch zwangsläufig mit verminderter Förderleistung, dann wird das Prinzip "Vollschlauch" verletzt und es wird ein entsprechender Messfehler auftreten, weil gasförmiges Kohlenstoffdioxid die Durchfluss-Messeinrichtung 4 durchströmt.

Ein weiterer problematischer Betriebsfall könnte entstehen, wenn auf den Foliensack zukünftig verzichtet werden würde und sanitäre und mikrobakteriell unbedenkliche Verhältnisse im Gastro- bzw. Rücknahmetank 7 durch an sich bekannte CIP-Reinigungsverfahren (CIP: cleaning in place; automatische Reinigung an Ort und Stelle im Durchfluss) sichergestellt werden. In diesem Fall tritt über den Eintritt E Gas aus dem Gastro- bzw. Rücknahmetank 7 in die Überführungsleitung L ein, das keinesfalls in die Messleitung 12 gelangen und dort die Durchfluss-Messeinrichtung 4 beaufschlagen darf.

Es ist daher Aufgabe der vorliegenden Erfindung, bei der Rücknahme von Bier oder kohlenstoffdioxidhaltigen Getränken mittels der Vorrichtung der vorstehend beschriebenen Gattung unkontrollierte und unplanmäßige Kohlenstoffdioxid-Entbindung zu verhindern, um dadurch bedingte Messfehler zu vermeiden.

Diese Aufgabe wird durch die Merkmale im Anspruch 1 gelöst. Vorteilhafte Ausführungsformen der Vorrichtung gemäß der Erfindung sind Gegenstand der Unteransprüche. Ein mit der Vorrichtung durchführbares Verfahren zur Rücknahme eines Getränks ist Gegenstand des Anspruchs 6. Vorteilhafte Ausgestaltungen des Verfahrens zur Rücknahme eines Getränks sind Gegenstand der sich anschließenden Unteransprüche.

### ZUSAMMENFASSUNG DER ERFINDUNG

Der grundlegende erfinderische Gedanke besteht darin, dass wenigstens an einer Stelle in der Überführungsleitung wenigstens eine Einrichtung angeordnet ist, die dazu eingerichtet ist, bei der Früherkennung einer bevorstehenden oder Detektierung einer vollzogenen Kohlenstoffdioxid-Entbindung durch wenigstens eine der Einrichtungen ein Steuersignal zu generieren, das die Pumpe zeitnah, in Bruchteilen von Sekunden, stillsetzt.

Dies kann erreicht werden durch
(a) eine Einrichtung, die dazu eingerichtet ist, um als eine Druckmess-Einrichtung den Systemdruck an der Saugseite der Pumpe zu messen und einen Druckabfall auf den Lösungsdruck des Kohlenstoffdioxids im Getränk festzustellen;
(b) eine Einrichtung, die dazu eingerichtet ist, um als eine Gasblasenerkennungs-Einrichtung die in der Strömung im Saugstutzen der Pumpe enthaltenen Gasblasen zumindest qualitativ oder auch quantitativ zu detektieren;
(c) eine Einrichtung, die dazu eingerichtet ist, um als eine Durchflussüberwachungs-Einrichtung die Messinformationen der Durchfluss-Messeinrichtung auf eine festzulegende kritische Reduzierung oder einen kritischen abfallenden Gradienten des Durchflusses in der Messleitung zu verwerten und zu interpretieren;
(d) eine Einrichtung, die dazu eingerichtet ist, um als eine Strömung detektierende Einrichtung den Durchfluss im rücknahmetankseitigen Ende der Überführungsleitung auf eine festzulegende kritische Reduzierung oder einen kritischen abfallenden Gradienten hin zu erfassen;
(e) eine Einrichtung, die dazu eingerichtet ist, um als eine Flüssigkeit oder Gasblasen detektierende Einrichtung die in der Strömung im rücknahmetankseitigen Ende der Überführungsleitung enthaltenen Gasblasen zumindest qualitativ oder auch quantitativ zu detektieren.

Alle Einrichtungen (a) bis (e) eignen sich insbesondere zur Früherkennung einer ggf. bevorstehenden Entbindung von Kohlenstoffdioxid, wobei die Einrichtungen (d) oder (e) am frühzeitigsten dieses Ereignis anzeigen, sofern die Ursachen für dieses Ereignis im Rücknahmetank oder im Übergangsbereich zwischen diesem und der sich anschließenden Überführungsleitung begründet sein müssen.

Die Ausführungsform der Einrichtung nach (a) sieht vor, den Systemdruck bevorzugt an der Saugseite der Pumpe zu messen und zu überwachen. Hierzu wird vorgeschlagen, dass bevorzugt im Saugstutzen oder im Bereich des Saugstutzens der Pumpe eine Druckmess-Einrichtung vorgesehen ist. Da die Vorrichtung bei der regulären Rücknahme des Getränks immer deutlich oberhalb des Lösungsdrucks für Kohlenstoffdioxid im Getränk arbeitet, wird bei einer Unterbrechung des Zulaufs am rücknahmetankseitigen Ende der Überführungsleitung an der Pumpe ein Druckabfall auf den Lösungsdruck des Kohlenstoffdioxids im Getränk stattfinden. Dieser Druckabfall wird durch die Druckmess-Einrichtung erfasst, in einer Überwachungseinrichtung erkannt und es wird ein Steuersignal generiert, das die Pumpe zeitnah, in Bruchteilen von Sekunden, stillsetzt.

Die Ausführungsform der Einrichtung nach (b) sieht vor, dass bevorzugt im Saugstutzen oder im Bereich des Saugstutzens der Pumpe eine Gasblasenerkennungs-Einrichtung (z.B. in Form eines sog. Blasen- oder Bubble-Sensors) vorgesehen ist, die ggf. dort in der Strömung enthaltenen Gasblasen zumindest qualitativ oder auch quantitativ detektieren kann. Findet nun als Folge der Unterschreitung des Lösungsdrucks des Kohlenstoffdioxids im rückgeführten Getränk eine Entbindung des Kohlenstoffdioxids statt, dann werden diese Gasblasen an dieser Stelle, also weit vor der Durchfluss-Messeinrichtung, die die Gasblasen aus Gründen der Messgenauigkeit nicht passieren dürfen, erfasst. Es wird ein Steuersignal generiert, das in der vorstehend beschriebenen Weise die Pumpe zeitnah, in Bruchteilen von Sekunden, stillsetzt.

Die Ausführungsform der Einrichtung nach (c) verwertet die Messinformationen der Durchfluss-Messeinrichtung (beispielsweise MID). In dem Moment, wo der Zufluss bei der Rücknahme des Getränks unterbrochen wird, bildet sich diese Reduzierung des Volumenstromes in den Messwerten der Durchfluss-Messeinrichtung ab. Um diese Veränderung zu erfassen, wird vorgeschlagen, dass im Bereich der Durchfluss-Messeinrichtung oder im Zugriffsbereich einer der Durchfluss-Messeinrichtung zugeordneten Messwerteverarbeitungs-Einrichtung eine Durchflussüberwachungs-Einrichtung vorgesehen ist. Immer dann, wenn der Durchfluss eine festzulegende kritische Reduzierung oder einen kritischen abfallenden Gradienten erfährt, wird ein Steuersignal generiert, das die Pumpe zeitnah, in Bruchteilen von Sekunden, stillsetzt.

Ein anderer Vorschlag sieht vor, dass am rücknahmetankseitigen Ende der Überführungsleitung eine Strömung detektierende Einrichtung nach (d) vorgesehen ist. Bei der die Strömung detektierende Einrichtung kann es sich beispielsweise um einen Turbinendurchflussmesser handeln. Die Einrichtung erfasst zeitnah den Durchfluss an ihrem Einbauort und liefert hierfür ein auswertbares Signal. Immer dann, wenn der Durchfluss eine festzulegende kritische Reduzierung oder einen kritischen abfallenden Gradienten erfährt, wird aus den den Durchfluss abbildenden Signalen ein Steuersignal generiert, das die Pumpe zeitnah, in Bruchteilen von Sekunden, stillsetzt.

Bei der Ausbildung der Einrichtung nach (e) in Form einer Flüssigkeit oder Gasblasen detektierende Einrichtung handelt es sich um den vorstehend genannten Blasensensor, der das Vorhandensein von Blasen, der Gasphase, oder auch das Nichtvorhandensein von Blasen, demnach der homogenen Phase Flüssigkeit, signalisiert und in der vorstehend beschriebenen Weise Steuersignale generiert.

Eine vorteilhafte Weiterbildung der vorstehend beschriebenen alternativen Ausführungsformen besteht auch darin, dass mehr als eine dieser Ausführungsformen in der Vorrichtung realisiert sind, vor allem dann, wenn aus den möglichen Kombinationen jeweils synergetische Effekte erzielt werden.

So ist es beispielsweise sinnvoll und vorteilhaft, wie dies weiterhin vorgeschlagen wird, dass bevorzugt im Saugstutzen oder im Bereich des Saugstutzens der Pumpe eine Druckmess-Einrichtung und am rücknahmetankseitigen Ende der Überführungsleitung eine wahlweise Strömung oder Flüssigkeit oder Gasblasen detektierende Einrichtung vorgesehen sind.

Eine weitere zweckmäßige Kombination besteht darin, dass bevorzugt im Saugstutzen oder im Bereich des Saugstutzens der Pumpe eine Gasblasenerkennungs-Einrichtung und am rücknahmetankseitigen Ende der Überführungsleitung eine wahlweise Strömung oder Flüssigkeit oder Gasblasen detektierende Einrichtung vorgesehen sind.

Die beiden vorstehen erwähnten Kombinationsmöglichkeiten beziehen jeweils die Einrichtung am rücknahmetankseitigen Ende der Überführungsleitung mit ein. An dieser Stelle, nämlich am Eintritt des rückzuführenden Getränks in die Überführungsleitung, nehmen kritische Zustände in der Regel ihren Ausgang. Die andere Stelle liegt bevorzugt im Bereich des Saugstutzens der Pumpe, die den Transport der unerwünschten Gasblasen bewirkt. Da beide Stellen deutlich voneinander entfernt angeordnet sind, ergibt sich hierdurch somit eine sicherheitstechnisch sinnvolle Redundanz.

Um zu verhindern, dass unter keinen Umständen der Druck im getränkebeaufschlagten Bereich der Vorrichtung, insbesondere am Pumpeneinlass, den Lösungs- bzw. Entgasungsdruck des Getränks erreicht oder unterschreitet, werden zwei weitere vorteilhafte Ausführungsformen vorgeschlagen.

Die eine sieht vor, dass die Pumpe in Abhängigkeit von wenigstens einer Einrichtung, die vorstehend genannt und erläutert wurden, derart regelbar ist, dass der Druck am Einlass der Pumpe die vorstehende Bedingung erfüllt, während die andere Ausführungsform dadurch gekennzeichnet ist, dass das Rückschlag-/Druckhalteventil in Abhängigkeit von wenigstens einer vorgenannten Einrichtung derart ansteuer- und einstellbar ist, dass der Druck am Einlass der Pumpe die vorstehende Bedingung erfüllt.

Mit der vorstehend vorgeschlagene Vorrichtung und ihren vorteilhaften Ausgestaltungen lässt sich, und dies ist der Kern der Erfindung, ein messtechnisch und eichamtlich unbedenkliches Verfahren zur Rücknahme kohlenstoffdioxidhaltiger Getränke aus dem Rücknahme- bzw. Gastrotank in den Anlieferungstank durchführen. Dieses Verfahren zeichnet sich in an sich bekannter Weise dadurch aus, dass das Getränk die Überführungsleitung derart durchströmt, dass dieses nach Verlassen des Rücknahmetanks aus der Überführungsleitung abgezweigt und der Messleitung oberstromig der Pumpe zugeführt wird, nach Durchströmen der Messleitung aus dieser unterstromig des Rückschlag-/Druckhalteventils abgezweigt und der zum Anlieferungstank führenden Überführungsleitung zugeführt wird. Das Verfahren zeichnet sich erfindungsgemäß dadurch aus, dass mit wenigstens einer Einrichtung, die die entsprechenden Merkmale (a) bis (e), wie vorstehend angegeben, aufweist, eine Früherkennung einer bevorstehenden oder eine Detektierung einer vollzogenen Kohlenstoffdioxid-Entbindung durchgeführt wird.

Dabei ist es von Vorteil, wie dies eine Ausgestaltung des Verfahrens vorsieht, dass mittels der Einrichtung(en) der vorbeschriebenen Art die Förderleistung der Vorrichtung derart eingestellt ist, dass an keiner Stelle der vom Getränk beaufschlagten Vorrichtung der Druck im Getränk den Entbindungsdruck des Kohlenstoffdioxids im Getränk erreicht oder unterschreitet.

Eine andere Ausgestaltung des Verfahrens sieht vor, dass mittels der vorbeschriebenen Einrichtung(en) der Druck im getränkebeaufschlagten Bereich der Vorrichtung derart eingestellt ist, dass an keiner Stelle der vom Getränk beaufschlagten Vorrichtung der Druck im Getränk den Entbindungsdruck des Kohlenstoffdioxids im Getränk erreicht oder unterschreitet.

Die Verwendung von Foliensäcken, sog. "Inlinern", im Gastro- bzw. Rücknahmetank ist eine bislang notwendige aber auch aufwendige Maßnahme zur Sicherstellung einer sanitär und mikrobakteriell unbedenklichen Bevorratung des Getränks. Wenn es gelingt, den Gastro- bzw. Rücknahmetank mit einem an sich bekannten CIP-Reinigungsverfahren in einen sanitär und mikrobakteriell unbedenklichen Zustand zu versetzten, bevor das Getränk in den Tank zur Bevorratung eingebracht wird, dann kann künftig auf diesen Foliensack verzichtet werden. Für diesen Fall muss sichergestellt werden, da der Foliensack als Verschlussmittel für den Austritts des Rücknahmetanks in die Überführungsleitung bei Leerfallen des Rücknahmetanks entfällt, dass kein Gas in die Überführungsleitung und damit in die Durchfluss-Messeinrichtung in der Messleitung gelangt. Zu diesem Zweck wird vorgeschlagen, dass wenigstens am rücknahmetankseitigen Ende der Überführungsleitung eine Überwachung des Phasenwechsels Flüssigkeit/Gas vorgesehen ist.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung vier bevorzugte Ausführungsformen der vorgeschlagenen Vorrichtung dargestellt und nachfolgend nach Aufbau und Funktion beschrieben unter der Voraussetzung, dass diese Ausführungsformen nur Beispiele für die Erfindung darstellen, nicht aber die Erfindung auf diese speziell dargestellten Beispiele beschränkt ist.

Es zeigen
- **Figur 1**: in abstrahierter, schematischer Darstellung (Blockschaltbild) die Vorrichtung gemäß der Erfindung, wobei lediglich nur die bei der Rücknahme des Getränks beaufschlagten wesentlichen Bereiche und Komponenten der Vorrichtung dargestellt sind und die Strömungspfeile die Strömungsrichtung des Getränks bei der Rücknahme angeben und
- **Figur 2**: in naturgetreuerer, aber ebenfalls schematischer Darstellung die bei der Rücknahme des Getränks durchströmte erfindungsgemäße Vorrichtung gemäß **Figur 1**, wobei die durch breitere Strichstärke hervorgehobenen Bereiche und Komponenten den Umfang der erfindungsgemäßen Vorrichtung nach **Figur 1** abbilden und die mit schmaler Strichstärke dargestellten Bereiche das für die Erfindung nicht in Betracht zu ziehende Umfeld der erfindungsgemäßen Vorrichtung darstellen.

### DETAILLIERTE BESCHREIBUNG

Die bekannte Vorrichtung zur Mengenbestimmung bei der Abgabe eines kohlenstoffdioxidhaltigen Getränks G, insbesondere Bier B, aus einem Anlieferungstank 1 in einen Gastrotank 7 oder bei der Rücknahme dieses Getränks G aus dem nunmehr als ein Rücknahmetank 7 fungierender Gastrotank wurde vorstehend bereits in ihren wesentlichen Bereichen und mit ihren wesentlichen Komponenten beschrieben (**Figuren 1** und **2**). Daher kann sich die nachfolgende Beschreibung auf Ergänzungen beschränken.

### Betriebsweise: "Abgabe eines kohlenstoffdioxidhaltigen Getränks"

Bei dieser Betriebsweise wird die Vorrichtung, ausgehend von einem Anlieferungstank 1, in dem ein kohlenstoffdioxidhaltiges Getränk G, insbesondere Bier B, bevorratet wird, über eine Überführungsleitung L zu einem Gastro- oder Rücknahmetank 7 durchströmt. Die Überführungsleitung L besteht, im Verlauf ihrer diesbezüglichen Durchströmung, aus dritten Leitungsabschnitten 14, die jeweils einerseits an einzelnen separaten Tanksegmenten Anschluss finden und andererseits zusammengeführt sind, aus einem sich anschließenden vierten Leitungsabschnitt 14a, einer Messleitung 12, einem zweiten Leitungsabschnitt 10a, einem ersten Leitungsabschnitt 10 und einer auf eine Schlauchtrommel 6 aufwickelbaren flexiblen Leitung 8 (Druckschlauch), die in einem am Gastro- oder Rücknahmetank 7 anschließbaren Zapfventil 9 endet. Die Messleitung 12 bildet einen Abschnitt der Überführungsleitung L und ist stets, sowohl bei der Abgabe als auch bei der Rücknahme des Getränks G, zum Gastro- oder Rücknahmetank 7 hin durchströmt. In der Messleitung 12 sind, in Strömungsrichtung gesehen, eine Pumpe 2, ein Gasmessverhüter 3, eine Durchfluss-Messeinrichtung 4 (z.B. MID) und ein Rückschlag-/Druckhalteventil 5 angeordnet. Zwischen Anlieferungstank 1 und Pumpe 2 ist im vierten Leitungsabschnitt 14a ein sechstes Absperrventil 20 und zwischen Rückschlag-/Druckhalteventil 5 und Schlauchtrommel 6 ist im zweiten Leitungsabschnitt 10a ein fünftes Absperrventil 19 angeordnet. Beide Absperrventile 20, 19 sind bei der Abgabe des Getränks G geöffnet.

### Betriebsweise: "Rücknahme eines kohlenstoffdioxidhaltigen Getränks"

Diese Betriebsweise erfordert sowohl eine erste Rückführleitung 11 als auch eine zweite Rückführleitung 13, die jeweils im Bypass zur Messleitung 12 geführt ist und die jeweils beiderseits in die Überführungsleitung L einmündet. Die beiden Einmündungsstellen der ersten Rückführleitung 11 in die Überführungsleitung L sind mit a' und a" und jene der zweiten Rückführleitung 13 sind mit b' und b" gekennzeichnet, wobei die dritte und die vierte Einmündungsstelle b', b", bezogen auf die Strömungsrichtung in der Messleitung 12, oberstromig der ersten und der zweiten Einmündungsstelle a', a" angeordnet sind. Dabei bildet die erste Einmündungsstelle a' den Übergang zwischen dem ersten und dem zweiten Leitungsabschnitt 10, 10a, die dritte Einmündungsstelle b' den Übergang zwischen dem zweiten Leitungsabschnitt 10a und der Messleitung 12, die zweite Einmündungsstelle a" den Übergang zwischen der Messleitung 12 und dem vierten Leitungsabschnitt 14a und die vierte Einmündungsstelle b" den Übergang zwischen dem vierten und dem dritten Leitungsabschnitt 14a, 14. In unmittelbarer Nähe zur jeweiligen Einmündungsstelle a', a", b', b" ist in der zugeordneten Rückführleitung 11, 13 ein Absperrventil vorgesehen, und zwar bei a' das erste Absperrventil 15, bei a" das zweite Absperrventil 16, bei b' das dritte Absperrventil 17 und bei b" das vierte Absperrventil 18. Bei der Rücknahme des Getränks G sind diese Absperrventile 15 bis 18 zwangsläufig jeweils geöffnet, während die Absperrventile 19, 20 zwangsläufig geschlossen sind. Die Strömungsrichtungen des Getränks G bei seiner Rücknahme aus dem Rücknahmetank 7 (Eintritt E) auf dem Weg in den Anlieferungstank 1 (Austritt A) sind in der Überführungsleitung L und in den Rückführleitungen 11, 13 durch Pfeile gekennzeichnet. Durch die Strömungsführung bei der Rücknahme des Getränks G erfolgt eine der Abgabe des Getränks G entsprechende Durchströmung der Messleitung 12.

Die nachstehend beschriebenen vorteilhaften Aufführungsformen der erfindungsgemäßen Vorrichtung basieren alle auf dem gleichen erfinderischen Grundgedanken, dass nämlich an wenigstens einer besonders kritischen oder geeigneten Stelle in der Überführungsleitung wenigstens eine der Früherkennung einer bevorstehenden oder Detektierung einer vollzogenen Kohlenstoffdioxidentbindung dienende Einrichtung M angeordnet ist.

Eine vorteilhafte Ausführungsform sieht vor, den Systemdruck an der Saugseite der Pumpe 2 zu messen und zu überwachen. Hierzu wird vorgeschlagen, dass bevorzugt im Saugstutzen oder im Bereich des Saugstutzens der Pumpe 2 eine Druckmess-Einrichtung M1 vorgesehen ist (s. **Figuren 1** und **2**). Da die Vorrichtung bei der regulären Rücknahme des Getränks G, B immer deutlich oberhalb des Lösungsdrucks für Kohlenstoffdioxid im Getränk G, B arbeitet, wird bei einer Unterbrechung des Zulaufs am rücknahmetankseitigen Ende der Überführungsleitung L an der Pumpe 2 ein Druckabfall auf den Lösungsdruck des Kohlenstoffdioxids im Getränk G, B stattfinden. Dieser Druckabfall wird durch die Druckmess-Einrichtung M1 erfasst, in einer zugeordneten, nicht dargestellten und bezeichneten Überwachungseinrichtung erkannt und es wird ein Steuersignal generiert, das die Pumpe 2 zeitnah, in Bruchteilen von Sekunden, stillsetzt.

Eine weitere Ausführungsform sieht vor, dass bevorzugt im Saugstutzen oder im Bereich des Saugstutzens der Pumpe 2 eine Gasblasenerkennungs-Einrichtung M4 (z.B. in Form eines sog. Blasen- oder Bubble-Sensors) vorgesehen ist, die ggf. dort in der Strömung enthaltenen Gasblasen zumindest qualitativ oder auch quantitativ detektieren kann. Findet nun als Folge der Unterschreitung des Lösungsdrucks des Kohlenstoffdioxids im rückgeführten Getränk G, B eine Entbindung des Kohlenstoffdioxids statt, dann werden diese Gasblasen an dieser Stelle, also weit vor der Durchfluss-Messeinrichtung 4 (z.B. MID), die sie aus Gründen der Messgenauigkeit nicht passieren dürfen, erfasst. Es wird ein Steuersignal generiert, das in der vorstehend beschriebenen Weise die Pumpe 2 zeitnah, in Bruchteilen von Sekunden, stillsetzt.

Eine andere Ausführungsform verwertet und interpretiert die Messinformationen der Durchfluss-Messeinrichtung 4 (beispielsweise MID). In dem Moment, wo der Zufluss bei der Rücknahme des Getränks G, B unterbrochen wird, bildet sich diese Reduzierung des Volumenstromes in den Messwerten der Durchfluss-Messeinrichtung 4 ab. Um diese Veränderung zu erfassen, wird vorgeschlagen, dass im Bereich der Durchfluss-Messeinrichtung 4 oder im Zugriffsbereich einer der Durchfluss-Messeinrichtung 4 zugeordneten, nicht dargestellten und bezeichneten Messwerteverarbeitungs-Einrichtung eine Durchflussüberwachungs-Einrichtung M2 vorgesehen ist (s. **Figuren 1** und **2**). Immer dann, wenn der Durchfluss eine festzulegende kritische Reduzierung oder einen kritischen abfallenden Gradienten erfährt, wird ein Steuersignal generiert, das die Pumpe 2 zeitnah, in Bruchteilen von Sekunden, stillsetzt.

Ein anderer Vorschlag sieht vor, dass am rücknahmetankseitigen Ende der Überführungsleitung L eine wahlweise Strömung oder Flüssigkeit oder Gasblasen detektierende Einrichtung M3 vorgesehen ist (s. **Figuren 1** und **2**). Bei der die Strömung detektierende Einrichtung kann es sich beispielsweise um einen Turbinendurchflussmesser handeln. Die Einrichtung M3 erfasst zeitnah den Durchfluss an ihrem Einbauort und liefert hierfür ein auswertbares Signal. Immer dann, wenn der Durchfluss eine festzulegende kritische Reduzierung oder einen kritischen abfallenden Gradienten erfährt, wird aus den den Durchfluss abbildenden Signalen ein Steuersignal generiert, das die Pumpe 2 zeitnah, in Bruchteilen von Sekunden, stillsetzt. Bei der Ausbildung in Form einer wahlweise Flüssigkeit oder Gasblasen detektierenden Einrichtung M3 handelt es sich beispielsweise um den vorstehend genannten Blasensensor, der das Vorhandensein von Blasen, der Gasphase, oder auch das Nichtvorhandensein von Blasen, demnach der homogenen Phase Flüssigkeit, signalisiert und in der vorstehend beschriebenen Weise Steuersignale generiert.

Eine vorteilhafte Weiterbildung der vorstehend beschriebenen alternativen Ausführungsformen besteht auch darin, dass mehr als eine dieser Ausführungsformen in der Vorrichtung realisiert sind, vor allem dann, wenn aus den möglichen Kombinationen der Einrichtungen M1 bis M4 jeweils synergetische Effekte erzielt werden.

So ist es beispielsweise sinnvoll und vorteilhaft, wie dies weiterhin vorgeschlagen wird, dass bevorzugt im Saugstutzen oder im Bereich des Saugstutzens der Pumpe 2 eine Druckmess-Einrichtung M1 und am rücknahmetankseitigen Ende der Überführungsleitung L eine wahlweise Strömung oder Flüssigkeit oder Gasblasen detektierende Einrichtung M3 vorgesehen sind.

Eine weitere zweckmäßige Kombination besteht darin, dass bevorzugt im Saugstutzen oder im Bereich des Saugstutzens der Pumpe 2 eine Gasblasenerkennungs-Einrichtung M4 und am rücknahmetankseitigen Ende der Überführungsleitung L eine wahlweise Strömung oder Flüssigkeit oder Gasblasen detektierende Einrichtung M3 vorgesehen sind.

Die beiden vorstehen erwähnten Kombinationsmöglichkeiten M1 und M3 oder M4 und M3 beziehen jeweils die Einrichtung M3 am rücknahmetankseitigen Ende der Überführungsleitung L mit ein. An dieser Stelle, nämlich am Eintritt E des rückzuführenden Getränks G, B in die Überführungsleitung L, nehmen kritische Zustände in der Regel ihren Ausgang. Die andere Stelle liegt im saugseitigen Bereich der Pumpe 2, bevorzugt im Saugstutzen oder im Bereich des Saugstutzens der Pumpe 2, die den Transport der unerwünschten Gasblasen bewirkt. Da beide Stellen deutlich voneinander entfernt angeordnet sind, ergibt sich hierdurch somit eine sicherheitstechnisch sinnvolle Redundanz.

Um zu verhindern, dass unter keinen Umständen der Druck im getränkebeaufschlagten Bereich der Vorrichtung, insbesondere am Pumpeneinlass, den Lösungs- bzw. Entgasungsdruck des Getränks G, B erreicht oder unterschreitet, werden zwei weitere vorteilhafte Ausführungsformen vorgeschlagen.

Die eine sieht vor, dass die Pumpe 2 in Abhängigkeit von wenigstens einer Einrichtung M1 bis M4, die vorstehend genannt und erläutert wurden, derart regelbar ist, dass der Druck am Einlass der Pumpe die vorstehende Bedingung erfüllt, während die andere Ausführungsform dadurch gekennzeichnet ist, dass das Rückschlag-/Druckhalteventil 5 in Abhängigkeit von wenigstens einer vorgenannten Einrichtung M1 bis M4 derart ansteuer- und einstellbar ist, dass der Druck am Einlass der Pumpe die vorstehende Bedingung erfüllt,.

Da die Vorrichtung im gesamten getränkeführenden System mittels Kohlenstoffdioxid deutlich oberhalb des Lösungsdrucks von Kohlenstoffdioxid im Getränk vorgespannt ist, wird nach Anhalten der Pumpe 2 das entbundene gasförmige Kohlenstoffdioxid wieder in Lösung überführt, so dass die Mengenabgrenzung im Vollschlauchsystem unter den eichamtlichen Bedingungen sichergestellt ist.

### BEZUGSZEICHENLISTE DER VERWENDETEN ABKÜRZUNGEN

- 1: Anlieferungstank
- 2: Pumpe
- 3: Gasmessverhüter
- 4: Durchfluss-Messeinrichtung (z.B. MID)
- 5: Rückschlag-/Druckhalteventil
- 6: Schlauchtrommel
- 7: Rücknahmetank (Gastrotank)
- 8: flexible Leitung (Druckschlauch)
- 9: Zapfventil

- 10: erster Leitungsabschnitt
- 10a: zweiter Leitungsabschnitt

- 11: erste Rückführleitung
- 12: Messleitung
- 13: zweite Rückführleitung

- 14: dritter Leitungsabschnitt
- 14a: vierter Leitungsabschnitt

- 15: erstes Absperrventil
- 16: zweites Absperrventil
- 17: drittes Absperrventil
- 18: viertes Absperrventil
- 19: fünftes Absperrventil
- 20: sechstes Absperrventil

- A: Austritt
- B: Bier
- E: Eintritt
- G: Getränk (kohlenstoffdioxidhaltig)
- L: Überführungsleitung (14, 14a, 12, 10a, 10, 8)

- M: Einrichtung (der Früherkennung einer bevorstehenden oder Detektierung einer vollzogenen Kohlenstoffdioxid-Entbindung dienend)
- M1: Druckmess-Einrichtung
- M2: Durchflussüberwachungs-Einrichtung
- M3: (jeweils wahlweise) Strömung oder Flüssigkeit oder Gasblasen detektierende Einrichtung
- M4: Gasblasenerkennungs-Einrichtung (z.B. Blasen- oder Bubblesensor)

- a': erste Einmündungsstelle (erste Rückführleitung 11)
- a": zweite Einmündungsstelle (erste Rückführleitung 11)

- b': dritte Einmündungsstelle (zweite Rückführleitung 13)
- b": vierte Einmündungsstelle (zweite Rückführleitung 13)

## Patentansprüche

1. Vorrichtung zur Mengenbestimmung bei der Rücknahme eines kohlenstoffdioxidhaltigen Getränks (G), insbesondere Bier (B), aus einem Rücknahmetank (7) in einen Anlieferungstank (1), mit
• einer sich von dem Anlieferungstank (1) zu dem Rücknahmetank (7) erstreckenden, der Überführung des Getränks (G) dienenden Überführungsleitung (L; 14, 14a, 12, 10a, 10, 8),
• einer Messleitung (12), die einen Abschnitt der Überführungsleitung (L) bildet,
• einer der Messleitung (12) zugeordneten Durchfluss-Messeinrichtung (4) zum Messen einer durch die Messleitung (12) strömenden Getränkemenge,
• einem oberstromig der Durchfluss-Messeinrichtung (4) angeordneten Gasmessverhüter (3) zur Abscheidung von Gasbestandteilen aus dem in der Messleitung strömenden Getränk (G),
• einer oberstromig des Gasmessverhüters (3) in der Messleitung (12) angeordneten Pumpe (2) und einem unterstromig der Durchfluss-Messeinrichtung (4) in der Messleitung (12) angeordneten Rückschlag-/Druckhalteventil (5),
• einer ersten und einer zweiten Rückführleitung (11, 13), die jeweils im Bypass zur Messleitung (12) geführt ist und jeweils beiderseits in die Überführungsleitung (L) einmündet,
• wobei die erste Rückführleitung (11) über eine erste und eine zweite Einmündungsstelle (a', a") und die zweite Rückführleitung (13) über eine dritte und eine vierte Einmündungsstelle (b', b") in die Überführungsleitung (L) einmünden,
• wobei, bezogen auf die Strömungsrichtung in der Messleitung (12), die dritte Einmündungsstelle (b') oberstromig der ersten Einmündungsstelle (a') und die vierte Einmündungsstelle (b") oberstromig der zweiten Einmündungsstelle (a") angeordnet sind, und
• wobei die Rückführleitungen (11, 13) im Bereich jeder Einmündungsstelle (a', a"; b', b") durch ein zugeordnetes Absperrventil (15, 16; 17, 18) absperrbar sind,
• und mit einem zwischen benachbarten Einmündungsstellen (a', b'; a", b") angeordneten Absperrventil (19; 20),
**dadurch gekennzeichnet,**
**dass** wenigstens an einer Stelle in der Überführungsleitung (L) wenigstens eine der folgenden Einrichtungen (M; M1, M2, M3, M4) angeordnet ist, um
(a) eine Einrichtung, die dazu eingerichtet ist, um als eine Druckmess-Einrichtung (M1) den Systemdruck an der Saugseite der Pumpe (2) zu messen und einen Druckabfall auf den Lösungsdruck des Kohlenstoffdioxids im Getränk (G) festzustellen;
(b) eine Einrichtung, die dazu eingerichtet ist, um als eine Gasblasenerkennungs-Einrichtung (M4) die in der Strömung im Saugstutzen der Pumpe (2) enthaltenen Gasblasen zumindest qualitativ oder auch quantitativ zu detektieren;
(c) eine Einrichtung, die dazu eingerichtet ist, um als eine Durchflussüberwachungs-Einrichtung (M2) die Messinformationen der Durchfluss-Messeinrichtung (4) auf eine festzulegende kritische Reduzierung oder einen kritischen abfallenden Gradienten des Durchflusses in der Messleitung (12) zu verwerten und zu interpretieren;
(d) eine Einrichtung, die dazu eingerichtet ist, um als eine die Strömung detektierende Einrichtung (M3) den Durchfluss im rücknahmetankseitigen Ende der Überführungsleitung (L) auf eine festzulegende kritische Reduzierung oder einen kritischen abfallenden Gradienten hin zu erfassen;
(e) eine Einrichtung, die dazu eingerichtet ist, um als eine Flüssigkeit oder Gasblasen detektierende Einrichtung (M3) die in der Strömung im rücknahmetankseitigen Ende der Überführungsleitung (L) enthaltenen Gasblasen zumindest qualitativ oder auch quantitativ zu detektieren;
und **dass** die Einrichtung (M1, M2, M3, M4) weiterhin dazu eingerichtet ist, bei ihrer Früherkennung einer bevorstehenden oder Detektierung einer vollzogenen Kohlenstoffdioxid-Entbindung ein Steuersignal zu generieren, das die Pumpe (2) zeitnah, in Bruchteilen von Sekunden, stillsetzt.

2. Vorrichtung nach Anspruch 1,
**dadurch gekennzeichnet,**
**dass** im Saugstutzen oder im Bereich des Saugstutzens der Pumpe (2) die Druckmess-Einrichtung (M1) und am rücknahmetankseitigen Ende der Überführungsleitung (L) die die Strömung oder die die Flüssigkeit oder Gasblasen detektierende Einrichtung (M3) vorgesehen sind.

3. Vorrichtung nach Anspruch 1,
**dadurch gekennzeichnet,**
**dass** im Saugstutzen oder im Bereich des Saugstutzens der Pumpe (2) die Gasblasenerkennungs-Einrichtung (M4) und am rücknahmetankseitigen Ende der Überführungsleitung (L) die die Strömung oder die die Flüssigkeit oder Gasblasen detektierende Einrichtung (M3) vorgesehen sind.

4. Vorrichtung nach einem der vorhergehenden Ansprüche,
**dadurch gekennzeichnet,**
**dass** die Pumpe (2) in Abhängigkeit von wenigstens einer der Einrichtungen (M; M1, M2, M3, M4) derart regelbar ist, dass der Druck am Einlass der Pumpe (2) den Lösungs- bzw. Entgasungsdruck des Getränks (G) nicht erreicht oder unterschreitet.

5. Vorrichtung nach einem der vorhergehenden Ansprüche,
**dadurch gekennzeichnet,**
**dass** das Rückschlag-/Druckhalteventil (5) in Abhängigkeit von wenigstens einer der Einrichtungen (M; M1, M2, M3, M4) derart ansteuer- und einstellbar ist, dass der Druck am Einlass der Pumpe (2) den Lösungs- bzw. Entgasungsdruck des Getränks (G) nicht erreicht oder unterschreitet.

6. Verfahren, durchgeführt mit einer Vorrichtung nach einem der vorhergehenden Ansprüche, wobei bei der Rücknahme des kohlenstoffdioxidhaltigen Getränks (G) aus dem Rücknahmetank (7) in den Anlieferungstank (1) das Getränk (G) die Überführungsleitung (L) derart durchströmt,
• dass das Getränk (G) nach Verlassen des Rücknahmetanks (7) aus der Überführungsleitung (L) an der ersten Einmündungsstelle (a') in die erste Rückführleitung (11) abgezweigt und
• der Messleitung (12) oberstromig der Pumpe (2) an der zweiten Einmündungsstelle (a") zugeführt wird,
• nach Durchströmen der Messleitung (12) aus dieser unterstromig des Rückschlag-/Druckhalteventils (5) an der dritten Einmündungsstelle (b') in die zweite Rückführleitung (13) abgezweigt und
• der zum Anlieferungstank (1) führenden Überführungsleitung (L) an der vierten Einmündungsstelle (b") zugeführt wird,
**dadurch gekennzeichnet,**
**dass** wenigstens an einer Stelle in der Überführungsleitung (L) wenigstens eine der folgenden Einrichtungen (M; M1, M2, M3, M4) angeordnet ist und folgende Schritte ausführt
(a) eine Druckmess-Einrichtung (M1), die den Systemdruck an der Saugseite der Pumpe (2) misst und einen Druckabfall auf den Lösungsdruck des Kohlenstoffdioxids im Getränk (G) feststellt;
(b) eine Gasblasenerkennungs-Einrichtung (M4), die die in der Strömung im Saugstutzen der Pumpe (2) enthaltenen Gasblasen zumindest qualitativ oder auch quantitativ detektiert;
(c) eine Durchflussüberwachungs-Einrichtung (M2), die die Messinformationen der Durchfluss-Messeinrichtung (4) auf eine festzulegende kritische Reduzierung oder einen kritischen abfallenden Gradienten des Durchflusses in der Messleitung (12) verwertet und interpretiert;
(d) eine die Strömung detektierende Einrichtung (M3), die den Durchfluss im rücknahmetankseitigen Ende der Überführungsleitung (L) auf eine festzulegende kritische Reduzierung oder einen kritischen abfallenden Gradienten hin erfasst;
(e) eine Flüssigkeit oder Gasblasen detektierende Einrichtung (M3) die die in der Strömung im rücknahmetankseitigen Ende der Überführungsleitung (L) enthaltenen Gasblasen zumindest qualitativ oder auch quantitativ detektiert;
und **dass** die Einrichtung (M1, M2, M3, M4) weiterhin bei ihrer Früherkennung einer bevorstehenden oder Detektierung einer vollzogenen Kohlenstoffdioxid-Entbindung ein Steuersignal generiert, das die Pumpe (2) zeitnah, in Bruchteilen von Sekunden, stillsetzt.

7. Verfahren nach Anspruch 6,
**dadurch gekennzeichnet,**
**dass** mittels der Einrichtung(en) (M; M1, M2, M3, M4) die Förderleistung der Vorrichtung derart eingestellt ist, dass an keiner Stelle der vom Getränk (G) beaufschlagten Vorrichtung der Druck im Getränk (G) den Entbindungsdruck des Kohlenstoffdioxids im Getränk (G) erreicht oder unterschreitet.

8. Verfahren nach Anspruch 6,
**dadurch gekennzeichnet,**
**dass** mittels der Einrichtung(en) (M; M1, M2, M3, M4) der Druck im getränkebeaufschlagten Bereich der Vorrichtung derart eingestellt ist, dass an keiner Stelle der vom Getränk (G) beaufschlagten Vorrichtung der Druck im Getränk (G) den Entbindungsdruck des Kohlenstoffdioxids im Getränk (G) erreicht oder unterschreitet.

9. Verfahren nach einem der Ansprüche 6 bis 8,
**dadurch gekennzeichnet,**
**dass** bei Verzicht auf einen Foliensack im Rücknahmetank (7) wenigstens am rücknahmetankseitigen Ende der Überführungsleitung (L) eine Überwachung des Phasenwechsels Flüssigkeit/Gas vorgesehen ist.

## Claims

1. A device for determining the volume when returning a carbonated beverage (G), in particular beer (B) from a return tank (7) into a delivery tank (1), with
• a transfer line (L; 14, 14a, 12, 10a, 10, 8) that serves to transfer the beverage (G) and extends from the delivery tank (1) to the return tank (7),
• a measuring line (12) that forms a section of the transfer line (L),
• a flow measuring apparatus (4) assigned to the measuring line (12) for measuring a quantity of beverage flowing through the measuring line (12),
• a gas extractor (3) arranged upstream from the flow measuring apparatus (4) for removing the gas components from the beverage (G) flowing in the measuring line,
• a pump (2) arranged upstream from the gas extractor (3) in the measuring line (12), and a check valve/pressure retention valve (5) arranged downstream from the flow measuring apparatus (4) in the measuring line (12),
• a first and a second return line (11, 13) that each run in a bypass to the measuring line (12) and each lead into the transfer line (L) on both sides,
• wherein the first return line (11) leads into the transfer line (L) via a first and a second entrance point (a', a"), and the second return line (13) leads into the transfer line (L) via a third and a fourth entrance point (b', b"),
• wherein in terms of the direction of flow in the measuring line (12), the third entrance point (b') is arranged upstream from the first entrance point (a'), and the fourth entrance point (b") is arranged upstream from the second entrance point (a"), and
• wherein the return lines (11, 13) can be shut off by an assigned shutoff valve (15, 16; 17, 18) in the region of each entrance point (a', a"; b', b"),
• and with a shutoff valve (19; 20) arranged between adjacent entrance points (a', b'; a", b"),
**characterized in that**
at least one of the following apparatuses (M; M1, M2, M3, M4) is arranged at least at one point in the transfer line (L),
(a) an apparatus that is configured to
measure the system pressure at the suction side of the pump (2) and determine a pressure drop to the solution pressure for the carbon dioxide in the beverage (G) as a pressure measuring apparatus (M1);
(b) an apparatus that is configured to
at least qualitatively or also quantitatively detect the gas bubbles contained in the flow at the suction port of the pump (2) as a gas bubble recognition apparatus (M4);
(c) an apparatus that is configured to
evaluate or interpret the measured information from the flow measuring apparatus (4) for a critical reduction to be established or a critical falling gradient of the flow in the measuring line (12) as a flow monitoring apparatus (M2);
(d) an apparatus that is configured to
ascertain the flow in the return-tank-side end of the transfer line (L) for a critical reduction to be established or a critical falling gradient as an apparatus (M3) detecting the flow;
(e) an apparatus that is configured to at least qualitatively or also quantitatively detect the gas bubbles contained in the flow in the return-tank-side end of the transfer line (L) as a liquid or gas bubble detecting apparatus (M3);
and that the apparatus (M1, M2, M3, M4) is furthermore configured to generate a control signal that quickly stops the pump (2) in fractions of seconds upon the early recognition of a pending, or detection of a complete, release of carbon dioxide.

2. The device according to claim 1,
**characterized in that**
the pressure measuring apparatus (M1) is provided at the suction port, or in the region of the suction port of the pump (2), and the apparatus (M3) detecting the flow or the liquid or gas bubbles is provided at the return-tank-side end of the transfer line (L).

3. The device according to claim 1,
**characterized in that**
the gas bubble recognition apparatus (M4) is provided at the suction port, or in the region of the suction port of the pump (2), and the apparatus (M3) detecting the flow or the liquid or gas bubbles is provided at the return-tank-side end of the transfer line (L).

4. The device according to one of the preceding claims,
**characterized in that**
the pump (2) can be regulated depending on at least one of the apparatuses (M; M1, M2, M3, M4) such that the pressure at the inlet of the pump (2) does not reach or fall below the solution, or respectively the degasification pressure of the beverage (G).

5. The device according to one of the preceding claims,
**characterized in that**
the check/pressure retention valve (5) can be controlled and adjusted depending on at least one of the apparatuses (M; M1, M2, M3, M4) such that the pressure at the inlet of the pump (2) does not reach or fall below the solution, or respectively the degasification pressure of the beverage (G).

6. A method performed with a device according to one of the preceding claims, wherein when returning the carbonated beverage (G) from the return tank (7) to the delivery tank (1), the beverage (G) flows through the transfer line (L) such that
• after leaving the return tank (7), the beverage (G) branches from the transfer line (L) at the first entrance point (a') into the first return line (11), and
• is lead into the measuring line (12) upstream from the pump (2) at the second entrance point (a"),
• after flowing through the measuring line (12), branches therefrom downstream from the check/pressure retention valve (5) at the third entrance point (b') into the second return line (13), and
• is lead into the transfer line (L) running to the delivery tank (1) at the fourth entry point (b"),
**characterized in that**
at least one of the following apparatuses (M; M1, M2, M3, M4) is arranged at at least one point in the transfer line (L) and executes the following steps:
(a) a pressure measuring apparatus (M1) measures the system pressure at the suction side of the pump (2) and determines a pressure drop to the solution pressure for the carbon dioxide in the beverage (G);
(b) a gas bubble recognition apparatus (M4) at least qualitatively or also quantitatively detects the gas bubbles contained in the flow at the suction port of the pump (2);
(c) a flow monitoring apparatus (M2) evaluates or interprets the measured information from the flow measuring apparatus (4) for a critical reduction to be established, or a critical falling gradient of the flow in the measuring line (12);
(d) an apparatus (M3) which detects the flow ascertains the flow in the return-tank-side end of the transfer line (L) for a critical reduction to be established, or a critical falling gradient;
(e) a liquid or gas bubble detecting apparatus (M3) at least qualitatively or also quantitatively detects the gas bubbles contained in the flow in the return-tank-side end of the transfer line (L);
and the apparatus (M1, M2, M3, M4) furthermore generates a control signal that quickly stops the pump (2) in fractions of seconds upon the early recognition of a pending, or detection of a complete, release of carbon dioxide.

7. The method according to claim 6,
**characterized in that**
by means of the apparatus(es) (M; M1, M2, M3, M4), the delivery rate of the device is adjusted such that the pressure in the beverage (G) does not reach or fall below the release pressure of the carbon dioxide in the beverage (G) at any point in the device supplied with the beverage (G).

8. The method according to claim 6,
**characterized in that**
by means of the apparatus(es) (M; M1, M2, M3, M4), the pressure is adjusted in the region of the device supplied with beverages such that the pressure in the beverage (G) does not reach or fall below the release pressure of the carbon dioxide in the beverage (G) at any point in the device supplied with the beverage (G).

9. The method according to one of claims 6 to 8,
**characterized in that**
when a plastic bag is not in the return tank (7), a monitoring of the phase change from liquid to gas is provided at least at the end of the transfer line (L) at the return tank side.

## Revendications

1. Dispositif de détermination de quantités lors du retrait d'une boisson (G) contenant du dioxyde de carbone, en particulier de la bière (B), à partir d'une citerne de retrait (7) dans une citerne de livraison (1), comprenant :
• une conduite de transfert (L ; 14, 14a, 12, 10a, 10, 8) s'étendant de la citerne de livraison (1) à la citerne de retrait (7) et servant à transférer la boisson (G),
• une conduite de mesure (12) formant une section de la conduite de transfert (L),
• un dispositif de mesure de débit (4) attribué à la conduite de mesure (12) pour la mesure d'une quantité de boisson s'écoulant à travers la conduite de mesure (12),
• un purgeur de gaz spécial (3) disposé en amont du dispositif de mesure de débit (4) pour l'élimination de composants gazeux à partir de la boisson (G) s'écoulant dans la conduite de mesure,
• une pompe (2) disposée en amont du purgeur de gaz spécial (3) dans la conduite de mesure (12) et une soupape de maintien de pression/antiretour (5) disposée en aval du dispositif de mesure de débit (4) dans la conduite de mesure (12),
• une première et une deuxième conduite de retour (11, 13) respectivement guidées dans la conduite de dérivation vers la conduite de mesure (12) et débouchant respectivement des deux côtés sur la conduite de transfert (L),
• dans lequel la première conduite de retour (11) débouche par le biais d'une première et d'une deuxième embouchure (a', a") et la deuxième conduite de retour (13) débouche par le biais d'une troisième et d'une quatrième embouchure (b', b") sur la conduite de transfert (L),
• dans lequel la troisième embouchure (b') est disposée en amont de la première embouchure (a') et la quatrième embouchure (b") est disposée en amont de la deuxième embouchure (a"), par rapport à la direction d'écoulement dans la conduite de mesure (12), et
• dans lequel les conduites de retour (11, 13) peuvent être fermées dans la région de chaque embouchure (a', a" ; b', b") par une soupape d'arrêt (15, 16 ; 17, 18) correspondante,
• et avec une soupape d'arrêt (19 ; 20) disposée entre des embouchures (a', b' ; a", b") voisines,
**caractérisé en ce que**
au moins l'un des dispositifs (M ; M1, M2, M3, M4) suivants est disposé au moins à un endroit dans la conduite de transfert (L),
(a) un dispositif conçu pour mesurer la pression de système sur le côté aspiration de la pompe (2), en tant que dispositif de mesure de pression (M1), et pour constater une chute de pression dans la pression de solution du dioxyde de carbone dans la boisson (G) ;
(b) un dispositif conçu pour détecter au moins qualitativement ou également quantitativement les bulles de gaz contenues dans le flux dans l'embout d'aspiration de la pompe (2), en tant que dispositif de reconnaissance de bulles de gaz (M4) ;
(c) un dispositif conçu pour exploiter et interpréter les informations de mesure du dispositif de mesure de débit (4) quant à une réduction critique à définir ou un gradient décroissant de façon critique du débit dans la conduite de mesure (12), en tant que dispositif de surveillance de débit (M2) ;
(d) un dispositif conçu pour détecter le débit dans l'extrémité de la conduite de transfert (L) côté citerne de retrait, quant à une réduction critique à définir ou un gradient décroissant de façon critique, en tant que dispositif de détection de flux (M3) ;
(e) un dispositif conçu pour détecter au moins qualitativement ou également quantitativement des bulles de gaz contenues dans le flux à l'extrémité de la conduite de transfert (L) côté citerne de retrait, en tant que dispositif de détection de liquide ou de bulles de gaz (M3) ;
et **en ce que** le dispositif (M1, M2, M3, M4) est en outre conçu pour générer un signal de commande arrêtant la pompe (2) en temps utile, en fractions de seconde, lors de sa reconnaissance précoce d'une décharge de dioxyde de carbone prochaine ou de sa détection d'une décharge survenue.

2. Dispositif selon la revendication 1,
**caractérisé en ce que**
le dispositif de mesure de pression (M1) est disposé dans l'embout d'aspiration ou dans la région de l'embout d'aspiration de la pompe (2), et le dispositif de détection de flux ou de liquide ou de bulles de gaz (M3) est prévu à l'extrémité de la conduite de transfert (L) côté citerne de retrait.

3. Dispositif selon la revendication 1,
**caractérisé en ce que**
le dispositif de reconnaissance de bulles de gaz (M4) est prévu dans l'embout d'aspiration ou dans la région de l'embout d'aspiration de la pompe (2) et le dispositif de détection de flux ou de liquide ou de bulles de gaz (M3) est prévu à l'extrémité de la conduite de transfert (L) côté citerne de retrait.

4. Dispositif selon l'une des revendications précédentes,
**caractérisé en ce que**
la pompe (2) est réglable de telle façon en fonction de l'un au moins des dispositifs (M ; M1, M2, M3, M4), que la pression à l'entrée de la pompe (2) n'atteint pas ou est inférieure à la pression de solution ou de dégazage de la boisson (G).

5. Dispositif selon l'une des revendications précédentes,
**caractérisé en ce que**
la soupape de maintien de pression/antiretour (5) peut être actionnée et réglée de telle façon en fonction de l'un au moins des dispositifs (M ; M1, M2, M3, M4), que la pression à l'entrée de la pompe (2) n'atteint pas ou est inférieure à la pression de solution ou de dégazage de la boisson (G).

6. Procédé, exécuté à l'aide d'un dispositif selon l'une des revendications précédentes, dans lequel, lors du retrait de la boisson (G) contenant du dioxyde de carbone à partir de la citerne de retrait (7) dans la citerne de livraison (1), la boisson (G) traverse la conduite de transfert (L) de telle façon que :
• la boisson (G) bifurque de la conduite de transfert (L) dans la première conduite de retour (11) au niveau de la première embouchure (a') après avoir quitté la citerne de retrait (7) et
• est guidée vers la conduite de mesure (12) en amont de la pompe (2) au niveau de la deuxième embouchure (a"),
• bifurque de celle-ci en aval de la soupape de maintien de pression/antiretour (5) dans la deuxième conduite de retour (13) au niveau de la troisième embouchure (b') après avoir traversé la conduite de mesure (12), et
• est guidée vers la conduite de transfert (L) menant à la citerne de livraison (1), au niveau de la quatrième embouchure (b"),
**caractérisé en ce que**
au moins l'un des dispositifs (M ; M1, M2, M3, M4) suivants est disposé au moins à un endroit dans la conduite de transfert (L) et exécute les étapes suivantes :
(a) un dispositif de mesure de pression (M1) mesurant la pression de système sur le côté aspiration de la pompe (2), et constatant une chute de pression dans la pression de solution du dioxyde de carbone dans la boisson (G) ;
(b) un dispositif de reconnaissance de bulles de gaz (M4) détectant au moins qualitativement ou également quantitativement les bulles de gaz contenues dans le flux dans l'embout d'aspiration de la pompe (2) ;
(c) un dispositif de surveillance de débit (M2) exploitant et interprétant les informations de mesure du dispositif de mesure de débit (4) quant à une réduction critique à définir ou un gradient décroissant de façon critique du débit dans la conduite de mesure (12) ;
(d) un dispositif de détection de flux (M3) détectant le débit dans l'extrémité de la conduite de transfert (L) côté citerne de retrait, quant à une réduction critique à définir ou un gradient décroissant de façon critique ;
(e) un dispositif de détection de liquide ou de bulles de gaz (M3) détectant au moins qualitativement ou également quantitativement des bulles de gaz contenues dans le flux à l'extrémité de la conduite de transfert (L) côté citerne de retrait ;
et **en ce que** le dispositif (M1, M2, M3, M4) est en outre conçu pour générer un signal de commande arrêtant la pompe (2) en temps utile, en fractions de seconde, lors de sa reconnaissance précoce d'une décharge de dioxyde de carbone prochaine ou de sa détection d'une décharge survenue.

7. Procédé selon la revendication 6,
**caractérisé en ce que**
le(s) dispositif(s) (M ; M1, M2, M3, M4) permet/permettent de régler le débit du dispositif de telle façon qu'à aucun endroit du dispositif sollicité par la boisson (G), la pression dans la boisson (G) n'atteint ou n'est inférieure à la pression de décharge du dioxyde de carbone dans la boisson (G).

8. Procédé selon la revendication 6,
**caractérisé en ce que**
le(s) dispositif(s) (M ; M1, M2, M3, M4) permet/permettent de régler la pression dans la région du dispositif sollicitée par la boisson (G) de telle façon qu'à aucun endroit du dispositif sollicité par la boisson (G), la pression n'atteint ou n'est inférieure à la pression de décharge du dioxyde de carbone dans la boisson (G).

9. Procédé selon l'une des revendications 6 à 8,
**caractérisé en ce que**
en l'absence de sachet dans la citerne de retrait (7), il est prévu un moyen de surveillance du changement de phase liquide/gaz au moins à l'extrémité de la conduite de transfert (L) côté citerne de retrait.
